Europäisches Patentamt

European Patent Office

Office européen des brevets

(19)

(11) Veröffentlichungsnummer: **0 196 482**
**A2**

(12) # EUROPÄISCHE PATENTANMELDUNG

(21) Anmeldenummer: 86102885.0

(51) Int. Cl.⁴: **B 05 D 1/06**
**B 60 R 22/00**

(22) Anmeldetag: 05.03.86

(30) Priorität: 05.03.85 DE 3507765

(43) Veröffentlichungstag der Anmeldung:
08.10.86 Patentblatt 86/41

(84) Benannte Vertragsstaaten:
DE GB SE

(71) Anmelder: Brose Fahrzeugteile GmbH & Co. KG
Ketschendorfer Strasse 38-48
D-8630 Coburg(DE)

(72) Erfinder: Volk, Hans-Joachim
Neugasse 4
D-8624 Ebersdorf/OT Frohnlach(DE)

(72) Erfinder: Becker, Herbert
Lothringer Strasse 9
D-8630 Coburg(DE)

(72) Erfinder: Meier, Norbert
Hausnummer 21
D-8633 Rödental/OT Schönstadt(DE)

(72) Erfinder: Lippert, Joachim, Dipl.-Ing.
Schopfenleite 1
D-8621 Untersiemau(DE)

(74) Vertreter: Weickmann, Heinrich, Dipl.-Ing. et al,
Patentanwälte Dipl.-Ing. H.Weickmann Dipl.-Phys.Dr.
K.Fincke Dipl.-Ing. F.A.Weickmann Dipl.-Chem. B. Huber
Dr.-Ing. H. Liska Dipl.-Phys.Dr. J. Prechtel Möhlstrasse 22
D-8000 München 80(DE)

(54) Verfahren zum Beschichten einer Führungsschiene, insbesondere für den Gurtmitnehmer eines passiven Rückhaltesystems in einem Kraftfahrzeug.

(57) Eine Führungsschiene (10) für den Gurtmitnehmer (20) eines passiven Rückhaltesystems in einem Kraftfahrzeug wird mit einer Polyamid-Schicht (48) versehen, und zwar dadurch, daß man die Führungsschiene mit elektrostatisch geladenen Lackpulverkügelchen besprüht und anschließend erhitzt, so daß die Lackpulverkügelchen schmelzen. Der Mitnehmer (20) ist ebenfalls mit Polyamid umspritzt (Schicht 46). Es ergibt sich eine hohe Wechselstandfestigkeit über einen großen Temperaturebereich.

FIG.1

EP 0 196 482 A2

PATENTANWÄLTE   DIPL.-ING. H. WEICKMANN, DIPL.-PHYS. DR. K. FINCKE
DIPL.-ING. F. A. WEICKMANN, DIPL.-CHEM. B. HUBER
DR.-ING. H. LISKA,   DIPL.-PHYS. DR. J. PRECHTEL

PREwe

Brose
Fahrzeugteile GmbH & Co.KG
Ketschendorfer Straße 38 - 48

8630 ·Coburg

G 1/85

8000 MÜNCHEN 86
POSTFACH 860 820
MÜHLSTRASSE 22
TELEFON (0 89) 98 03 52
TELEX 5 22 621
TELEGRAMM PATENTWEICKMANN MÜNCHEN

Verfahren zum Beschichten einer Führungsschiene, insbesondere
für den Gurtmitnehmer eines passiven Rückhaltesystems in einem
Kraftfahrzeug

Die Erfindung betrifft ein Verfahren zum Beschichten einer
Führungsschiene für einen Mitnehmer, insbesondere für den
Gurtmitnehmer eines passiven Rückhaltesystems in einem Kraftfahrzeug, mit einem seitlich in einen Längsschlitz ausmündenden Führungshohlraum zur Aufnahme eines Kraftübertragungsmittels sowie eines vom Kraftübertragungsmittel längs der
Führungsschiene bewegbaren, an einem den Längsschlitz quer
durchsetzenden Hals des Mitnehmers angeordneten Mitnehmerkopfes, wobei man thermoplastische Lackpulverkügelchen auf
die Führungshohlraumwandung aufbringt und durch Erhitzen zu
einer durchgehenden Schicht verschmelzt.

Bei einem bekannten Verfahren dieser Art wird die erhitzte
Führungsschiene in ein Lackpulverkügelchen-Wirbelbett gegegeben. Die Lackpulverkügelchen gelangen aufgrund des Wirbelzustands an alle Stellen der Führungsschiene, also auch in den Führungshohlraum. Sobald sie die heiße Schienenoberfläche berühren, schmelzen sie zu einer durchgehenden Schicht. An Stellen mit stärkerer Führungsschienen-Materialansammlung ergibt sich aufgrund der dortigen höheren Wärmekapazität eine dickere Beschichtung. Damit ergibt sich eine relativ große Mindest-Schichtdicke im Führungshohlraum, die unter Umständen auch noch dadurch vergrößert wird, daß die Temperaturen hier aufgrund der geringeren Wärmeabstrahlungsverluste von vorneherein höher liegen. Die sich ergebende relativ hohe Schichtdicke führt, abgesehen vom erhöhten Lack-Verbrauch, dazu, daß die Dimensionen des Führungshohlraum-Querschnitts entsprechend reduziert sind. So verringert sich bei einer Schichtdicke von 0,5 mm der Durchmesser eines zylindrischen Führungshohlraums um 1 mm. Da der Mitnehmerkopf mechanisch hoch belastbar sein muß, lassen sich dessen Dimensionen nicht beliebig verkleinern. Man muß daher eine entsprechend größer dimensionierte Führungsschiene einsetzen, was den Materialaufwand für die Führungsschiene erhöht und diese zudem auffälliger macht (vor allem bei einer Führungsschiene für den Gurtmitnehmer eines passiven Rückhaltesystems in einem Kraftfahrzeug).

Die Aufgabe der Erfindung liegt demgegenüber darin, das Verfahren eingangs genannter Art dahingehend zu verbessern, daß es die Herstellung von Führungsschienen mit verringerter Lack-Schichtdicke erlaubt.

Diese Aufgabe wird dadurch gelöst, daß man die Führungs-schiene mit elektrostatisch geladenen Lackpulverkügel-chen besprüht und anschließend erhitzt. Es hat sich herausgestellt, daß dieses für die Außenseitenbeschichtung großer Körper, z.B. von Spülmaschinen-Körben, eingesetzte, auch als "Airstatic"-Verfahren bezeichnete bekannte Verfahren sich auch für die gleichmäßige Innenseiten-Beschichtung

eines Führungshohlraums einer Führungsschiene eignet; man hätte annehmen können, daß das Abgehen vom Wirbelbett-Prinzip eine ungleichmäßige Schichtdicke zur Folge hat. Gemäß der Erfindung lassen sich Lackschichten mit einer Dicke von etwa 0,05 bis 0,3 mm herstellen, wobei 0,1 bis 0,2 mm Schichtdicke bevorzugt ist. Gegenüber dem bekannten Verfahren ergibt sich eine Schichtdickenreduzierung von etwa 1/5. Das Verfahren ist einfach durchzuführen, da hierzu lediglich mit einer Sprühpistole oder einer Mehrfach-Düsenanordnung das elektrostatisch aufgeladene Pulvermaterial auf die Schiene aufzubringen ist, die dann anschließend zum Verschmelzen der etwa 2 bis 3 Lackpulverkügelchen-Lagen entsprechend zu erhitzen ist. Eine Nacharbeitung der Lackschicht ist nicht erforderlich.

Zur Verbesserung der Lackhaftung und damit der Dauerstandfestigkeit der Beschichtung wird vorgeschlagen, daß man die aus Leichtmetall, vorzugsweise aus einer Aluminium-Legierung, gebildete Führungsschiene vor dem Besprühen chromatisiert, vorzugsweise gelb chromatisiert. Es hat sich gezeigt, daß diese Korrosions-Schutzmaßnahme die Verbindung zwischen Lack und Untergrund fördert. Alternativ oder vorzugsweise zusätzlich hierzu kann man die Führungsschiene vor dem Besprühen und nach dem Chromatisieren mit einem Reaktions-Primer behandeln, der einen vermittelnden Haftgrund zwischen dem Metall und der Lackschicht bildet.

Als besonders günstig haben sich Lackpulverkügelchen mit einem Durchmesser von etwa 30 bis 100 µm, vorzugsweise 50 bis 70 µm, am besten etwa 60 µm herausgestellt.

Eine überraschend hohe Reibfestigkeit erhält man bei Lackpulverkügelchen aus Polyamid aus 11-Aminododecansäure (PA 11). Bei Einbau der Führungsschiene in ein Rückhaltesystem für ein Kraftfahrzeug wurden einhunderttausend Lastwechsel vorgenommen ohne Beschädigung von Führungsschiene und Mitnehmer. Der Mitnehmer war hierbei ebenfalls mit einem Polyamid gebildet, nämlich mit einer Umspritzung aus Polyamid aus 12-Aminododecansäure (PA 12), vorzugsweise mit Molybdändisulfid-Zusatz.

Die Erfindung wird im folgenden an einem bevorzugten Ausführungsbeispiel an Hand der Zeichnung erläutert. Es zeigt:

Fig. 1 eine vereinfachte Seitenansicht auf einen Gurtmitnehmer, welcher an einer Führungsschiene geführt ist und

Fig. 2 einen vergrößerten Schnitt nach Linie II-II in Fig. 1.

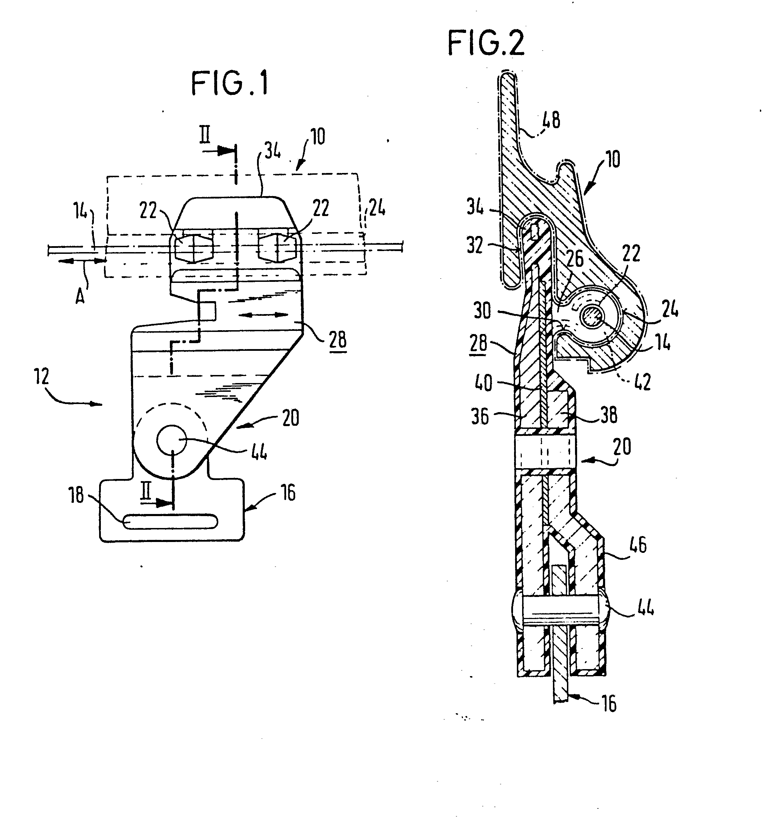

An der in Fig. 1 strichliert angedeuteten und in Fig. 2 im Schnitt näher dargestellten Führungsschiene 10 ist ein allgemein mit 12 bezeichneter Läufer mit Hilfe eines in der Führungsschiene 10 verlaufenden Kraftübertragungsmittels 14 in Längsrichtung A der Fig. 1 hin und her verschiebbar gelagert. Das Kraftübertragungsmittel 14 kann von einem Seil, einem zug- und drucksteifen Kabel oder ggf. auch von einem Gewindekabel gebildet sein. Der Läufer 12 besteht aus einem Gurthalterungsteil 16 mit Gurtöffnung 18 und einem mit diesem gelenkig verbundenen Mitnehmer 20, der an der Führungsschiene 10 geführt ist. Hierzu greift der Mitnehmer mit zwei Köpfen 22 jeweils in Form doppelkonischer, walzenähnlicher Führungselemente in einen im wesentlichen zylindrischen Führungshohlraum 24 der Führungsschiene 10 ein. Die

**0196482**

Köpfe 22 sind jeweils über einen Hals 26 mit dem angenähert plattenförmigen Mitnehmerkörper 28 verbunden.
Die beiden Hälse 26 durchsetzen dabei einen Längsschlitz 30, welcher eine seitliche Ausmündung des auf diese Weise seitlich offenen Führungshohlraums 24 bildet.

Um Schwenkbewegungen des Mitnehmers 20 um seine Köpfe 22 zuverlässig zu verhindern und um die Längsführung des Mitnehmers an der Führungsschiene 10 noch weiter zu verbessern, ist ein zweiter Führungshohlraum 32 in der Führungsschiene 10 vorgesehen in Form einer Längs-Nut, in die ein abgeflachtes Verlängerungsteil 34 am in den Figuren oberen Ende des Mitnehmers 20, den Querschnitt ausfüllend, eingreift.

Das Kraftübertragungsmittel 14 ist in nicht dargestellter Weise, z.B. mittels eines Seilnippels, zwischen den Köpfen 22 am Mitnehmer 20 festgelegt. Zum grundsätzlichen Aufbau des Mitnehmers wird auf die DE-OS 33 14 588 verwiesen. Danach besteht er im wesentlichen aus einer inneren Metallkonstruktion (Blechplatten 36,38) die in nicht dargestellter Weise miteinander vernietet sind und zwischen sich eine Zwischenplatte 40 halten, die an ihrem oberen Ende zur Verstärkung der Köpfe 22 mit umgebogenen Blechstreifen 42 versehen ist. Die unteren Enden der Blechplatten 36, 38 sind voneinander beabstandet zur Bildung einer Lagergabel für das Gurthalterungsteil 16 (Lagerbolzen 44). Die so gebogenen Platten 36, 38 und 40 bilden ein Metallskelett, welches allseitig mit einer Schicht 46 umspritzt. Diese Schicht besteht aus PA 12.

Die Führungsschiene 10 wiederum besteht aus einem gemäß Fig. 2 profilierten Aluminiumlegierungsprofil, welches in der folgenden Weise mit einer Schicht 48 ummantelt ist:

Die Führungsschiene 10 wird als erstes gelb chromatiert und anschließend mit einem Haftgrund versehen.

Die Schichtstärke liegt zwischen 5 und 10 µm. Das Chromatisieren sowie der Haftgrund verbessern die Haftung der aufzubringenden Kunststoffschicht. Im nächsten Schritt wird gemäß dem "Airstatic"-Verfahren die Führungsschiene mit elektrostatisch geladenen Lackpulverkügelchen besprüht. Man kann hierzu eine Spritzpistole oder eine entsprechende Mehrfach-Düsenanordnung einsetzen. Die Pulverkügelchen haften aufgrund ihrer Ladung an der Führungsschiene, jedoch nur innerhalb von zwei bis drei Pulverkügelchen-Lagen. Anschließend wird die vorher normal warme Führungsschiene erhitzt (200 bis 220° C über etwa 10 bis 30 Minuten), so daß die thermoplastischen Kügelchen schmelzen und sich die gewünschte durchgehend gleichmäßig starke Schicht ergibt. Bei einem Pulverkügelchen-Durchmesser von etwa 60 µm ergibt sich eine Schichtdicke zwischen 0,1 und 0,2 mm. Nach Abkühlung der Führungsschiene kann diese ohne Nachbehandlung montiert werden. Es werden Lackpulverkügelchen aus einem Polyamid, am besten aus PA 11, verwendet, da in letzterem Falle eine äußerst hohe Wechselstandfestigkeit gegeben ist. Bei einer Umspritzung des Mitnehmers mit PA 12 ergeben sich sowohl an der Führungsschiene als auch am Mitnehmer praktisch vernachlässigbare Abnutzungserscheinungen. So konnten ohne größere Abnutzungserscheinungen einhunderttausend Lastwechsel in einem Temperaturbereich zwischen minus 40 und plus 80° C durchgeführt werden. Das Material PA 12 ist mit einem Molybdändisulfid-Zusatz zur Verbesserung des schmiermittelfreien Laufes versehen; es ist im Handel erhältlich.

Die erfindungsgemäße Führungsschiene mit Mitnehmer kann auch in anderer Funktion eingesetzt werden, insbesondere in einem Fensterheber als Führung für den an die Fensterscheibe angreifenden Mitnehmer.

0196482

Die Führungsschiene 10 besteht bevorzugt aus einer Aluminium-Magnesium-Legierung, am besten aus AlMgSi 08 F 28. Da das Aluminium-Legierungsprofil nach der Herstellung relativ weich ist, wird es einer Wärmebehandlung zur Aushärtung unterzogen, wobei man über etwa 7 Stunden Temperaturen im Bereich von 170° C einhält. Diese Wärmebehandlung wird zweckmäßigerweise an der bereits einbaufertig-gebogenen Führungsschiene vorgenommen. Man erspart sich diesen eigenen Erhitzungsschritt, wenn man den sowieso erforderlichen Erhitzungsschritt zum Schmelzen der Lackpulverkügelchen auf der Führungsschiene derart ausgestaltet, daß sich gleichzeitig die gewünschte Materialaushärtung der Legierung ergibt. Man erhält brauchbare Festigkeitsergebnisse, wenn man die gewählte Schmelztemperatur (hier 200 bis 220° C) länger als zum Schmelzen erforderlich beibehält, insbesondere etwa 30 Minuten.

PATENTANWÄLTE     DIPL.-ING. H. WEICKMANN, DIPL.-PHYS. DR. K. FINCKE
DIPL.-ING. F. A. WEICKMANN, DIPL.-CHEM. B. HUBER
DR.-ING. H. LISKA,     DIPL.-PHYS. DR. J. PRECHTEL

0196482

PREwe

P 35 07 765.4-45

Brose
Fahrzeugteile GmbH & Co.KG

8000 MÜNCHEN 86
POSTFACH 860 820
MÜHLSTRASSE 22
TELEFON (089) 98 03 52
TELEX 5 22 621
TELEGRAMM PATENTWEICKMANN MÜNCHEN

## Patentansprüche

1. Verfahren zum Beschichten einer Führungsschiene für einen Mitnehmer, insbesondere für den Gurtmitnehmer eines passiven Rückhaltesystems in einem Kraftfahrzeug, mit einem seitlich in einen Längsschlitz ausmündenden Führungshohlraum zur Aufnahme eines Kraftübertragungsmittels sowie wenigstens eines vom Kraftübertragungsmittel längs der Führungsschiene bewegbaren, an einem den Längsschlitz quer durchsetzenden Hals des Mitnehmers angeordneten Mitnehmerkopfes, wobei man thermoplastische Lackpulverkügelchen auf die Führungshohlraumwandung aufbringt und durch Erhitzen zu einer durchgehenden Schicht verschmelzt,
dadurch gekennzeichnet ,
daß man die Führungsschiene mit elektrostatisch geladenen Lackpulverkügelchen besprüht und anschließend erhitzt.

2. Verfahren nach Anspruch 1,
dadurch gekennzeichnet ,
daß man die aus Leichtmetall gebildete Führungsschiene vor dem Besprühen chromatisiert.

3. Verfahren nach Anspruch 1, oder 2,

dadurch  g e k e n n z e i c h n e t  ,

daß man die Führungsschiene vor dem Besprühen mit einem Reaktions-Primer behandelt.

4. Verfahren nach Anspruch 3,

dadurch  g e k e n n z e i c h n e t  ,

daß man eine Primerschicht mit einer Dicke von 5 bis 10 µm aufbringt.

5. Verfahren nach einem der vorhergehenden Ansprüche,

dadurch  g e k e n n z e i c h n e t  ,

daß man Lackpulverkügelchen mit einem Durchmesser von 30 bis 100 µm verwendet.

6. Verfahren nach Anspruch 5,

dadurch  g e k e n n z e i c h n e t  ,

daß man Lackpulverkügelchen mit einem Durchmesser von 50 bis 70 µm verwendet.

7. Verfahren nach Anspruch 5,

dadurch  g e k e n n z e i c h n e t  ,

daß man Lackpulverkügelchen mit einem Durchmesser von 60 µm verwendet.

8. Verfahren nach einem der vorhergehenden Ansprüche,

dadurch  g e k e n n z e i c h n e t  ,

daß man eine Lackschicht mit einer Dicke von 0,05 bis 0,3 mm aufbringt.

9. Verfahren nach Anspruch 8,

dadurch  g e k e n n z e i c h n e t  ,

daß man eine Lackschicht mit einer Dicke von 0,1 bis 0,2 mm aufbringt.

10. Verfahren nach einem der vorhergehenden Ansprüche,
dadurch g e k e n n z e i c h n e t ,
daß man Lackpulverkügelchen aus einem Polyamid verwendet.

11. Verfahren nach Anspruch 10,
dadurch g e k e n n z e i c h n e t ,
daß man Lackpulverkügelchen aus einem Polyamid aus
11-Aminododecansäure verwendet.

12. Verfahren nach einem der vorhergehenden Ansprüche,
dadurch g e k e n n z e i c h n e t ,
daß man die mit den Lackpulverkügelchen versehene
Führungsschiene derart erhitzt, daß nicht nur die
Lackpulverkügelchen zu der durchgehenden Schicht
verschmelzen, sondern auch das Material der Führungsschiene aushärtet.

13. Verfahren nach Anspruch 12,
dadurch g e k e n n z e i c h n e t ,
daß man die Führungsschiene 20 Minuten bis 12 Stunden
erhitzt bei Temperaturen zwischen 150° und 300° C.

14. Verfahren nach Anspruch 13,
dadurch g e k e n n z e i c h n e t ,
daß man die Führungsschiene 30 Minuten erhitzt bei
Temperaturen zwischen 170° und 220° C.

15. Mitnehmer für eine gemäß dem Verfahren nach einem der
vorhergehenden Ansprüche beschichtete Führungsschiene,
dadurch g e k e n n z e i c h n e t ,
daß wenigstens der                    Mitnehmerkopf
(22,34) und der Mitnehmerhals (26) mit Polyamid
beschichtet sind.

16. Mitnehmer nach Anspruch 15,

   dadurch gekennzeichnet ,

   daß wenigstens der            eine Mitnehmerkopf
   (22,34) und der Mitnehmerhals (26) mit Polyamid aus
   12-Aminododecansäure beschichtet sind.

17. Mitnehmer nach Anspruch 16,

   dadurch gekennzeichnet ,

   daß das Polyamid aus 12-Aminododecansäure einen
   Molybdändisulfid-Zusatz aufweist.

0196482

FIG.2

FIG.1